# EUROPÄISCHE PATENTSCHRIFT

(11) **EP 1 882 544 B1**
(45) Veröffentlichungstag und Bekanntmachung des Hinweises auf die Patenterteilung: **01.10.2008**
(21) Anmeldenummer: 07013115.6
(22) Anmeldetag: 04.07.2007
(51) Int. Cl.: B23Q 1/01, B23Q 5/28, H02K 41/00

(54) **Fräs- und Bohrmaschine**
Milling and drilling machine
Fraiseuse et perceuse

(30) Priorität: 24.07.2006 DE 102006034123
(43) Veröffentlichungstag der Anmeldung: 30.01.2008
(73) Patentinhaber: Deckel Maho Seebach GmbH, 99846 Seebach (DE)
(72) Erfinder: Schmidt, Klaus, 99846 Seebach (DE); Prautzsch, Ines, 99891 Tabarz (DE)
(74) Vertreter: Beetz & Partner

(56) Entgegenhaltungen:
- EP-A2- 0 712 682
- WO-A-20/06072356
- DE-A1- 10 049 810
- DE-B3-3102004 034 87

## Beschreibung

Die Erfindung betrifft eine Fräs- und -Bohrmaschine mit einem formsteifen Maschinengestell, das zwei parallele Seitenwände und einen oberen Querträger aufweist, der auf den beiden Seitenwänden befestigt ist, mit einer in mindestens zwei Koordinatenachsen X, Z motorisch verfahrbaren Bearbeitungseinheit, die eine drehangetriebene Arbeitsspindel mit einwechselbaren Werkzeugen enthält, und mit einem Vorbau, der zwei quer beabstandete horizontale Führungsschienen aufweist, auf denen eine Werkstück-Tischanordnung mit einer Tischplatte zum Aufspannen eines Werkstücks in einer horizontalen Y-Koordinatenachse motorisch verfahrbar angeordnet ist.

Derartige Fräs- und Bohrmaschinen sind zur mehrachsigen Bearbeitung von Werkstücken in einer Aufspannung konzipiert und haben den wesentlichen Vorteil, dass neben extrem hohen Genauigkeitsanforderungen auch hohe Spanleistungen mit vertretbarem konstruktivem und steuerungstechnischem Aufwand erreicht werden können.

Aus der DE 10 2004 034 873 B ist eine gattungsgemäße Bohr- und Fräsmaschine bekannt, die ein Maschinengestell mit einer sockelartigen Basis und zwei formsteifen Seitenwänden aufweist. Die beiden Seitenwände sind durch eine obere Traverse zu einem einstückigen Portal miteinander verbunden. An der schrägen Frontfläche der Traverse ist in horizontalen Führungsschienen ein Schlitten verfahrbar, an dessen vertikaler Stirnseite eine Bearbeitungseinheit mit einer Arbeitsspindel motorisch verfahrbar geführt ist. Der Werkstücktisch ist auf horizontalen Führungsschienen eines Vorbaus in einer horizontalen Koordinatenachse bis unter die Traverse verfahrbar.

Aus der DE 102 59 215 A1 ist eine Bohr- und Fräsmaschine bekannt, die ein Maschinenbett sowie zwei wandartige Seitenständer aufweist. Auf der Oberseite der beiden wandartigen Seitenständer ist ein rahmenartiger Schlitten in der Y-X-Achse motorisch verfahrbar angeordnet, an dessen vertikaler Stirnseite eine Bearbeitungseinheit in den X- und Z-Achsen motorisch verfahrbar geführt ist. Zwischen den beiden wandartigen Seitenständern ist eine Werkstück-Tischanordnung angeordnet, die eine um eine horizontale Achse verdrehbare Brücke aufweist. Auf dem gegenüber der Drehachse quer versetzten Mittelsteg der Brücke ist eine ebene Tischplatte mit Spannmitteln zur Werkstückbefestigung vorgesehen.

Aufgabe der Erfindung ist es, eine Fräs- und Bohrmaschine zu schaffen, die vielgestaltiges Arbeit mit hohen Positioniergenauigkeiten und hohen Beschleunigungswerten bei besonders vorteilhaftem Spänefall ermöglicht.

Diese Aufgabe wird durch die im Patentanspruch 1 angegebenen Merkmale gelöst.

Ein besonderer Vorzug der erfindungsgemäßen Fräs- und Bohrmaschine besteht darin, dass die Werkstück-Tischanordnung auf den horizontalen quer beabstandeten Führungsschienen der sockelartigen Basis in der Y-Koordinatenachse bis unter den Querträger des portalartigen Maschinengestells verfahren werden kann. Da in der sockelartigen Basis zwischen den beiden Seitenwänden ein Freiraum vorhanden ist, ergibt sich ein besonders vorteilhafter Spänefall. Durch die sockelartige Basis mit den Seitenwänden, dem oberen Querträger und dem frontseitigen Vorbau ergibt sich eine monoblockartige Gesamtstruktur, die höchste Steifigkeitsanforderungen erfüllt.

Um an einem Werkstück möglichst vielgestaltige Arbeiten mit den notwendigen Genauigkeiten effektiv ausführen zu können, weist bei der erfindungsgemäßen Maschine der Ständer eine sockelartige Basis mit zwei formsteifen Seitenwänden auf, die durch ein oberes Querhaupt und durch einen stirnseiten Vorbau starr miteinander verbunden sind. Ein an dem Querhaupt in Horizontalführungen verfahrbarer Schlitten trägt an frontseitigen Vertikalführungen die als Fräskopf ausgebildete Bearbeitungseinheit, die in der Vertikalebene motorisch verfahrbar ist und mindestens ein auswechselbares Werkzeug aufweist.

Ein besonderer Vorzug dieser Maschinenausführung besteht darin, dass der Werkstücktisch auf horizontalen Führungen der sockelartigen Basis in einer Koordinatenachse bis unter das Querhaupt des etwa portalartigen Ständers verfahren werden kann. Da in der sockelartigen Basis zwischen den beiden Seitenwänden ein Freiraum vorhanden ist, ergibt sich ein besonders vorteilhafter Spänefall. Durch die sockelartige Basis mit den Seitenwänden, dem oberen Querhaupt und dem frontseitigen Vorbau ergibt sich eine monoblockartige Gesamtstruktur, die höchste Steifigkeitsanforderungen erfüllt.

Zum Erhalt der angestrebt hohen Positioniergenauigkeiten und der feinfühlig steuerbaren hohen Beschleunigungen werden für die Fahrbewegungen des Kreuzschlittens und der Bearbeitungseinheit zweckmäßig als Antriebsaggregate elektrische Linearmotoren eingesetzt, deren Sekundärteil jeweils zwischen den paarweise vorgesehenen Führungsschienen angeordnet ist. Die Primärteile dieser elektrischen Linearmotoren befinden sich an dem jeweils bewegten Maschinenteil.

Gemäß einer zweckmäßigen Ausgestaltung der Erfindung sind auf der sockelartigen Basis innen neben den beiden Seitenwänden des Maschinengestells horizontale Führungsschienen vorgesehen, die sich bis zum Vorbau erstrecken und der Auflage der motorisch verfahrbaren Werkstück-Tischanordnung dienen. Gemäß der Erfindung enthält diese Werkstück-Tischanordnung zwei elektrisch synchronisierte Linearmotoren, deren Sekundärteile an den Innenseiten der beiden Seitenwände und deren Primärteile vertikal an Bauteilen der Tischanordnung montiert sind.

Eine gute Sicht und Zugänglichkeit zum Arbeitsraum wird dadurch erzielt, dass die beiden Seitenwände eine frontseitige Abstufung aufweisen, wobei der Vorbau die gleiche Höhe wie die vorderen Endteile der beiden Seitenwände hat und eine vordere Querwand aufweist, die starr mit den vorderen Endteilen der beiden Seitenwände verbunden ist. Auf diese Weise wird vom Vorbau und den Seitenwänden ein Freiraum begrenzt, in dem ein Spänesammler angeordnet werden kann.

Für die erfindungsgemäße Fräs- und Bohrmaschine ist eine Werkstücktischanordnung besonders geeignet, die eine um eine horizontale Drehachse motorisch verschwenkbare Brücke enthält, auf deren gegenüber der Drehachse quer versetztem Mittelsteg eine ebene Tischplatte mit Spannmitteln zur Werkstückfixierung angeordnet ist. Die an den Mittelsteg der Brücke beidendig anschließenden vertikalen Lagerschenkel sind in je einem Schlitten verdrehbar gelagert, wobei die beiden die Brücke tragenden Schlitten Führungsschuhe sowie Antriebsaggregate für synchrone Fahrbewegungen beider Schlitten und weitere Antriebsaggregate für die Schwenkbewegungen der Brücke aufweisen.

Zweckmäßig sind in den Schlitten elektrisch synchronisierte Torque-Motoren als Schwenkantriebe für die Brücke sowie elektrisch synchronisierte Linearmotoren für die Verfahrbewegungen der beiden Schlitten vorgesehen. Auch die im Mittelsteg der Brücke drehbar gelagerte ebene Tischplatte wird zweckmäßig von einem in der Brücke positionierten Torque-Motor drehangetrieben. Die eingesetzten Torque-Motoren können bereits bei relativ geringen Drehzahlen hohe Drehmomente erzeugen und ergeben hohe Positioniergenauigkeiten der angetriebenen Bauteile.

Im Folgenden werden Ausführungsbeispiele der Erfindung anhand der Zeichnung ausführlich beschrieben. Es zeigen:
- Fig. 1: eine Fräs- und Bohrmaschine gemäß der Erfindung in perspektivischer Gesamtansicht;
- Fig. 2: die Fräs- und Bohrmaschine nach Fig. 1 in teilgeschnittener Frontansicht;
- Fig. 3: die Fräs- und Bohrmaschine nach Fig. 1 in teilgeschnittener Seitenansicht;
- Fig. 4: eine Werkstück-Tischanordnung für das in Fig. 1 bis 3 dargestellte Ausführungsbeispiel in perspektivischer Darstellung;
- Fig. 5: die Werkstück-Tischanordnung nach Fig. 4 im Vertikalschnitt.

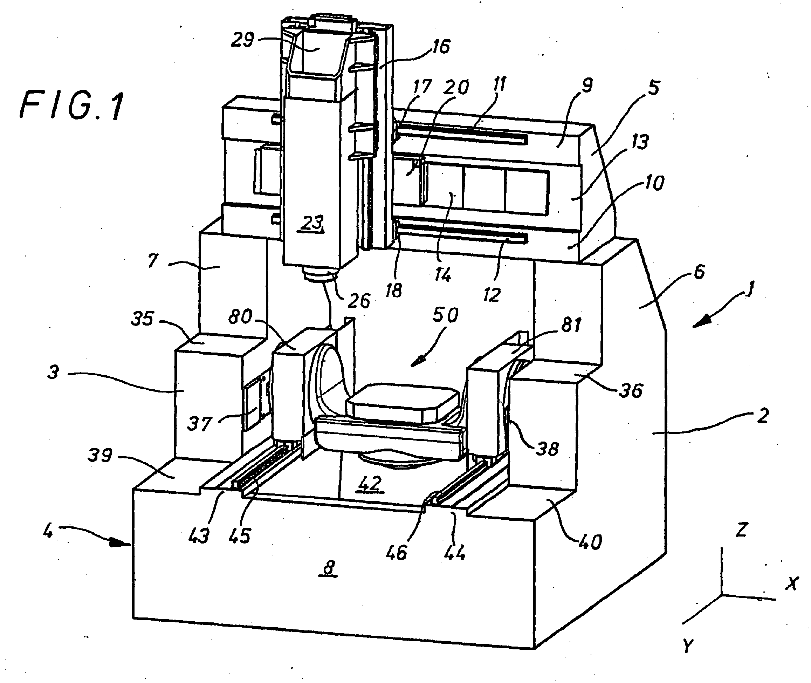

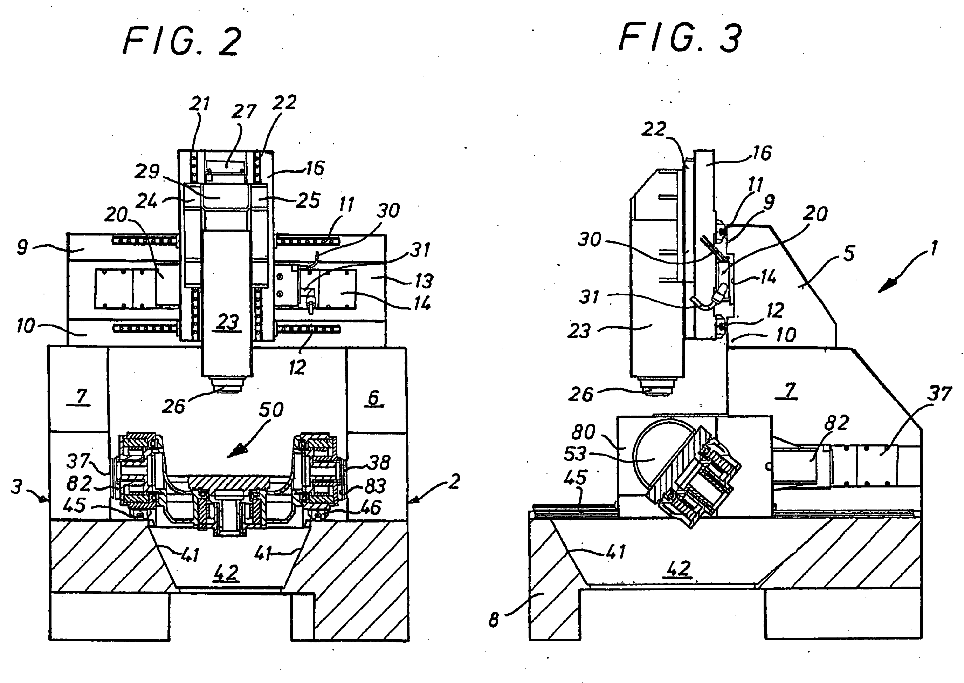

Die in den Figuren 1 bis 3 dargestellte Fräs- und Bohrmaschine enthält ein hochsteifes Maschinengestell 1, das zwei parallele Seitenwände 2, 3, einen frontseitigen Vorbau 4 sowie einen oberen Querträger 5 aufweist, der auf den rückwärtigen oberen Teilen 6, 7 der beiden Seitenwände 2, 3 befestigt ist. Die Seitenwände 2, 3 und der eine vordere Querwand 8 aufweisende Vorbau 4 sind zweckmäßig in Monoblockbauweise ausgeführt. Wie insbesondere aus Fig. 1 und 3 ersichtlich, hat der Querträger 5 einen etwa trapezförmigen sich nach unten erweiternden Querschnitt mit vertikaler Frontseite und schräger Rückwand. Die breitere Unterseite des Querträgers 5 ist auf der horizontalen Oberseite der oberen rückwärtigen Teile 6, 7 der beiden Seitenwände 2, 3 dauerhaft befestigt. An seiner Frontseite weist der Querträger 5 einen oberen und einen unteren balkenartigen Vorsprung 9, 10 auf, an denen je eine Führungsschiene 11, 12 befestigt ist. In dem zurückgesetzten mittleren Abschnitt 13 des Querträgers sind in einer Reihe nebeneinander die plattenförmigen Sekundärteile 14 eines elektrischen Linearmotors befestigt.

An den beiden frontseitigen Führungsschienen 11, 12 des Querträgers 5 ist ein Tragschlitten 16 in Führungsschuhen 17, 18 horizontal verfahrbar geführt, an dessen Rückseite ein mit den Sekundärteilen 14 zusammenwirkender Primärteil 20 des elektrischen Linearmotors montiert ist. An der Frontseite des Tragschlittens 16 sind zwei parallele vertikale Führungsschienen 21, 22 befestigt, an denen ein Spindelstock 23 über jeweils paarweise angeordnete Führungsschuhe 24, 25 vertikal verfahrbar geführt ist. Der Spindelstock bzw. das Spindelgehäuse 23 enthält eine Arbeitsspindel 26, die von einem eingebauten Elektromotor direkt angetrieben wird. Als Fahrantrieb für die aus dem Spindelstock 23 und der Arbeitsspindel 26 bestehenden Bearbeitungseinheit dient ein elektrischer Linearmotor, dessen plattenförmige Sekundärteile 27 an der Frontseite des Schlittens 16 zwischen den beiden Führungsschienen 21, 22 montiert sind. Der mit dem Sekundärteil 27 zusammenwirkende Primärteil des elektrischen Linearmotors für die vertikalen Fahrbewegungen des Spindelstocks 23 befindet sich an der Rückseite einer Tragkonstruktion 29 des Spindelstocks 23.

Wie den Figuren 2 und 3 entnehmbar, sind elektrische Versorgungskabel 30 sowie Kühlflüssigkeitsleitungen 31 für die elektrischen Linearmotoren vorgesehen. Wie aus Fig. 1 ersichtlich, weisen die beiden Seitenwände 2, 3 in ihrem mittleren Bereich eine Stufe 35, 36 zwischen den beiden rückwärtigen Oberteilen 6, 7 und dem Vorbau 4 auf. In den Seitenwänden 2, 3 im Bereich dieser Stufen 35, 36 sind die plattenförmigen ortsfesten Sekundärteile 37, 38 von elektrischen Linearmotoren montiert, wie dies aus Fig. 1, linker Teil, und Fig. 3 ersichtlich ist.

Die vorderen unteren Endteile 39, 40 der Seitenwände 2, 3 haben etwa die gleiche Höhe wie die vordere Querwand 8 des Vorbaus 4 und begrenzen über Schrägflächen 41 einen Freiraum 42, der als Spänesammler genutzt wird.

Wie aus Fig. 1 ersichtlich, erstrecken sich auf dem Vorbau 4 balkenförmige Auflager 43, 44 an der Innenseite der beiden Seitenwände 2, 3. Auf jedem Auflager 43, 44 ist eine Führungsschiene 45, 46 montiert, die sich bis zum rückwärtigen Ende des Maschinengestells 1 erstrecken (vgl. Fig. 3).

Auf den beiden Führungsschienen 45, 46 ist eine Tischanordnung 50 verfahrbar geführt, die bei dem dargestellten Ausführungsbeispiel über einen mittleren Tragteil und zwei seitliche Primärteile 82, 83 von Linearmotoren verfügt. Diese beiden Primärteile 82, 83 wirken mit den ortsfesten Sekundärteilen 37, 38 in den Seitenwänden 2, 3 des Maschinengestells 1 zusammen und bewirken Verfahrbewegungen der Tischanordnung 50 auf den ständerfesten Führungsschienen 45, 46. Der zentrale Tragteil der Tischanordnung 50 kann eine drehbare oder drehfeste Tischplatte 55 zum Aufspannen eines oder mehrerer Werkstücke tragen.

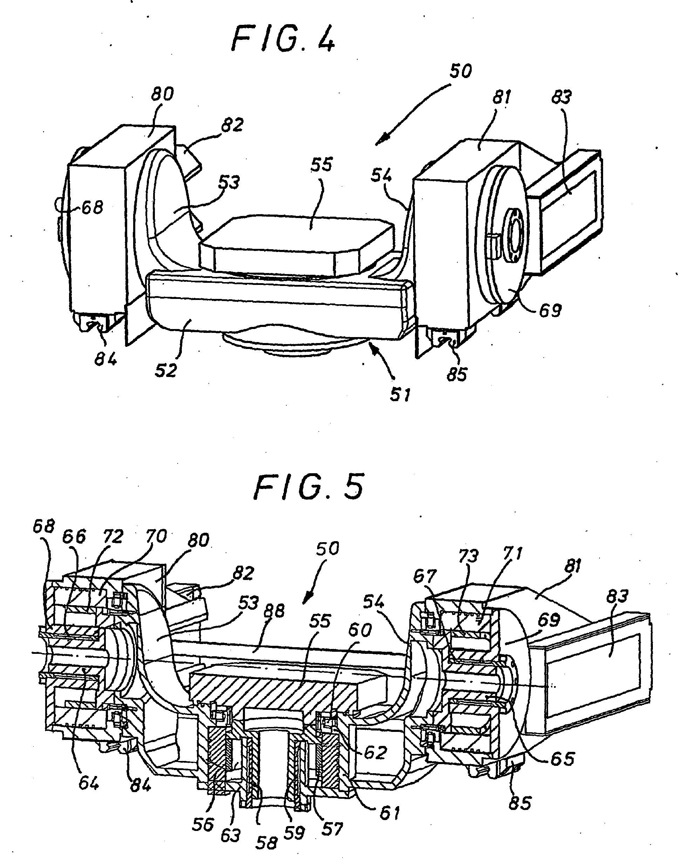

Bei dem in Fig. 1 bis 3 dargestellten Ausführungsbeispiel der Werkzeugmaschine wird eine spezielle Werkstück-Tischanordnung 50 verwendet, die in den Figuren 4 und 5 im Einzelnen dargestellt ist. Diese Tischanordnung 50 enthält eine Brücke 51, die aus einem formsteifen Mittelsteg 52 und zwei seitlichen aufgebogenen Schenkelteilen 53, 54 besteht. Im Mittelsteg 52 ist ein Werkstücktisch 55 gelagert, der - nicht dargestellte - parallele Spannnuten zur Fixierung eines oder auch mehrerer Werkstücke an seiner Oberfläche aufweist. Der Werkstücktisch 55 wird von einem Torque-Motor 56, 57 drehangetrieben, dessen mit Kühlkanälen versehener Stator 56 in einer zylindrischen Ausnehmung im Mittelsteg 52 befestigt ist. Der Rotor 57 des Torque-Motors stellt einen sog. Innenläufer dar und ist über einen Flansch mit einem hohlen Lagerzapfen 58 fest verbunden. Zum Feststellen des Werkstücktisches in vorgegebenen Drehstellungen dient eine Klemmbuchse 59, die an der Mantelfläche des Lagerzapfens 58 angreift, wenn ihre langgestreckte schmale Ringkammer mit einem Druckmittel beaufschlagt wird. Zur kippfreien Abstützung des Werkstücktisches 55 dienen stabile ringförmige Axial-/Radiallager 60, die dem Werkstücktisch 55 eine hohe Tragfähigkeit und Leichtgängigkeit verleihen. Der Torque-Motor kann hohe Drehmomente und auch hohe Drehgeschwindigkeiten erzeugen, sodass auch größere Werkstücke mit hoher Genauigkeit durch Fräsen und auch durch Drehen in einer Aufspannung bearbeitet werden können. Bei dem dargestellten Ausführungsbeispiel sind die seitlich bis in die Vertikale aufgebogenen Schenkelteile 53, 54 doppelwandig ausgeführt und mit dem Tragzylinder 61 für den Torque-Motor 56, 57 einteilig geformt. Wie aus Fig. 5 ersichtlich, umgibt der Tragzylinder 61 den an seiner äußeren Umfangsfläche mit spiralförmigen Nuten versehenen hohlzylindrischen Stator 56. Die spiralförmigen Nuten im Stator 56 bilden Kühlkanäle, die von einem Kühlmedium in bekannter Weise beaufschlagt werden. Der hohlzylindrische Stator 56 stützt sich mit seiner oberen Stirnfläche an einer Ringschulter 62 ab, die unmittelbar unter dem ringförmigen Axial-/Radiallager 60 an dem Tragzylinder 61 ausgebildet bzw. angeformt ist. Durch diese Anordnung werden die auf das Lager 60 ausgeübten Belastungen direkt in den stabilen Tragzylinder 61 eingeleitet. Der Tragzylinder 61 und der Stator 56 werden nach unten zusammen mit anderen Bauteilen durch einen Deckel 63 abgeschlossen, der einteilig geformt ist und eine zum Stator 56 koaxiale Hülse sowie einen daran angeformten Radialflansch aufweist.

Bei der Tischanordnung 50 nach Fig. 4, 5 ist an jedem der beiden Schenkelteile 53, 54 an deren Seitenflanke je ein hohler Traglagerzapfen 64, 65 befestigt, deren Mittelachsen zusammenfallen und eine gemeinsame Schwenkachse für die Brücke 51 und den Werkstücktisch bilden. Diese Schwenkachse erstreckt sich in einem vorgegebenen Abstand zur Oberfläche des Werkstücktischs 55. Auf jedem Traglagerzapfen 64, 65 sitzt eine Klemmbuchse 66, 67, die je eine nach radial innen durch ein Druckfluid verformbare Wand zur Klemmung des Traglagerzapfens 64 bzw. 65 aufweist. Jede Klemmbuchse 66, 67 ist in einer Hülse befestigt, die Teil eines kreisrunden Deckels 68, 69 ist.

Jeder Traglagerzapfen 64, 65 wird von je einem Torque-Motor angetrieben, die beide vorzugsweise elektrisch miteinander synchronisiert sind. Jeder Torque-Motor hat einen äußeren mit umlaufenden Kühlkanälen versehenen Stator 70, 71, der in einer zylindrischen Ausnehmung eines Gehäuses eines Schlittens 80, 81 befestigt ist und stirnseitig von dem scheibenförmigen Teil des Deckels 68, 69 gehalten wird. Mit dem jeweiligen Stator 70, 71 wirkt je ein Rotor 72, 73 als Innenläufer zusammen. Jeder Rotor 72, 73 ist über geeignete Befestigungsmittel mit dem zugehörigen Schenkelteile 53 bzw. 54 der Tischanordnung 50 fest verbunden und sorgt bei elektrischer Erregung der beiden synchronisierten Torque-Motoren 70, 72 und 71, 73 für die Schwenkbewegungen des Werkstücktisches in gewünschte Winkellagen vor oder auch während einer Werkstück-Bearbeitung. Bei dem dargestellten Ausführungsbeispiel ist jeder ringförmige Rotor 72, 73 kürzer als der jeweils zugehörige Stator 70, 71 und mit seiner axial inneren Stirnseite an einem inneren Radialflansch des Traglagerzapfens 64, 65 befestigt.

Die vorstehend beschriebenen Lagerungen der Tischanordnung 50 sind in einem Gehäuse je eines Schlittens 80, 81 aufgenommen. Am rückwärtigen Teil jedes Schlittens 80, 81 ist ein verfahrbarer Primärteil 82, 83 eines elektrischen Linearmotors vorgesehen. Der ortsfeste Sekundärteil 37, 38 der elektrischen Linearmotoren befindet sich an der Innenseite der jeweiligen Seitenwand 2, 3 des Maschinengestells 1, wie dies aus den Figuren 1 und 3 hervorgeht. An seiner Unterseite weist jeder Schlitten 80, 81 Führungsschuhe 84, 85 auf, die mit den in Fig. 2 dargestellten Führungsschienen 45, 46 zusammenwirken.

Die Erfindung ist nicht auf die dargestellten und vorstehend beschriebenen Ausführungsbeispiele beschränkt, sondern auf die beigefügte Ansprüche. So können in der erfindungsgemäßen Fräs- und Bohrmaschine auch andere Tischanordnungen eingesetzt werden. Zweckmäßig sollten diese Konstruktionen schlittenartige Baukörper aufweisen, in denen eine ggf. starre Tischkonstruktion befestigt ist. Diese schlittenartigen Baukörper sollten an einer äußeren Seitenwand den Funktionsteil eines elektrischen Linearmotors aufweisen, dessen anderer Funktionsteil an der Innenseite der Seitenwand des Maschinenständers befestigt ist.

## Patentansprüche

1. Fräs- und Bohrmaschine mit
- einem formsteifen Maschinengestell (1), das zwei parallele Seitenwände (2, 3) und einen oberen Querträger (5) aufweist, der auf den beiden Seitenwänden (2, 3) befestigt ist,
- einer in mindestens zwei Koordinatenachsen motorisch verfahrbaren Bearbeitungseinheit (23), die eine drehangetriebene Arbeitsspindel (26) mit einwechselbaren Werkzeugen enthält, und
- einem vor dem Maschinengestell (1) angeordneten Vorbau (4), auf dessen zwei quer beabstandeten horizontalen Führungsschienen eine Werkstück-Tischanordnung (50) mit einer Tischplatte zum Aufspannen eines Werkstücks in einer horizontalen Y-Koordinatenachse motorisch verfahrbar angeordnet ist,
**dadurch gekennzeichnet, dass**
- neben den Innenseiten der beiden Seitenwände (2, 3) des Maschinengestells (1) stationäre langgestreckte Auflager (43, 44) vorgesehen sind, auf denen Führungsschienen (45, 46) für die Werkstück-Tischanordnung (50) befestigt sind und
- der Antrieb für die Verfahrbewegung der Werkstück-Tischanordnung (50) in der Y-Koordinatenachse zwei elektrisch synchronisierte Linearmotoren aufweist, deren Sekundärteile (37, 38) an den Innenseiten der beiden Seitenwände (2, 3) des Maschinengestells (1) befestigt sind und deren Primärteile (82, 83) vertikal an Schlitten (80, 81) der Werkstück-Tischanordnung (50) montiert sind.

2. Fräs- und Bohrmaschine nach Anspruch 1,
**dadurch gekennzeichnet, dass**
an dem Querträger (5) in Horizontalführungen ein Schlitten (16) verfahrbar ist, der an frontseitigen Vertikalschienen (21, 22) die als Fräskopf ausgebildete Bearbeitungseinheit (23) trägt.

3. Fräs- und Bohrmaschine nach Anspruch 1 oder 2,
**dadurch gekennzeichnet, dass**
die Antriebsaggregate für den Horizontalschlitten (16) und die Bearbeitungseinheit (23) elektrische Linearmotoren sind, deren Sekundärteil jeweils zwischen den paarweise vorgesehenen Führungsschienen angeordnet ist.

4. Fräs- und Bohrmaschine nach einem der vorstehenden Ansprüche,
**dadurch gekennzeichnet, dass**
der Werkstücktisch (55) auf zwei horizontalen Führungsschienen (45, 46) verfahrbar ist, die am Vorbau (8) und auf einer sockelartigen Basis innen an den Seitenwänden (2, 3) des Maschinenständers (1) vorgesehen sind.

5. Fräs- und Bohrmaschine nach Anspruch 4,
**dadurch gekennzeichnet, dass**
der Antrieb für den Werkstücktisch (55) zwei elektrisch synchronisierte Linearmotoren aufweist, deren Sekundärteile (37, 38) an den Innenseiten der beiden Ständerseitenwände (2, 3) und deren Primärteile vertikal an Baukörpern der Tischkonstruktion montiert sind.

6. Fräs- und Bohrmaschine nach Anspruch 5,
**dadurch gekennzeichnet, dass**
die beiden Seitenwände (2, 3) des Maschinenständers (1) je eine frontseitige Abstufung (35, 36) aufweisen.

7. Fräs- und Bohrmaschine nach einem der vorstehenden Ansprüche,
**dadurch gekennzeichnet, dass**
in den vom Vorbau (8) und den Seitenwänden (2, 3) begrenzten Freiraum (42) ein Spänesammler angeordnet ist.

8. Fräs- und Bohrmaschine nach einem der vorstehenden Ansprüche,
**dadurch gekennzeichnet, dass**
der Vorbau (4) eine vordere Querwand (8) aufweist, die starr mit den beiden Seitenwänden (2, 3) des Maschinenständers (1) verbunden ist und die gleiche Höhe wie die vorderen Endteile der beiden Seitenwände (2, 3) hat.

9. Werkstück-Tischanordnung für eine Fräs- und Bohrmaschine mit einer Tischplatte zum Aufspannen eines Werkstücks in einer horizontalen Y-Koordinatenachse, die motorisch verfahrbar angeordnet ist , mit
- einer um eine horizontale Drehachse motorisch verfahrbaren Brücke (51), auf deren stabilem und gegenüber der Drehachse quer versetztem Mittelsteg (52) eine ebene Tischplatte (55) mit Spannmitteln zur Werkstückbefestigung angeordnet ist,
**dadurch gekennzeichnet, dass**
- die an den Mittelsteg (52) beidendig anschließenden Schenkelteile (53, 54) der Brücke (51) in je einem Schlitten (80,81) motorisch synchron verdrehbar gelagert sind und
- die beiden Schlitten (80, 81) je ein Primärteil (82, 83) eines elektrischen Linearmotors und Führungsschuhe (84, 85) aufweisen.

10. Tischanordnung nach Anspruch 9,
**dadurch gekennzeichnet, dass**
in den Schlitten (80, 81) elektrisch synchronisierte Torque-Motoren als Schwenkantriebe für die Brücke (51) angeordnet sind.

11. Tischanordnung nach Anspruch 9 oder 10,
**dadurch gekennzeichnet, dass**
in den Schlitten (80, 81) Fixiervorrichtungen zum Feststellen der Brücke (51) in ausgewählten Lagen angeordnet sind.

12. Tischanordnung nach einem der Ansprüche 9 bis 11,
**dadurch gekennzeichnet, dass**
die Schenkelteile (53, 54) der Brücke (51) über Axial-/Radiallagerungen in den Schlitten (80, 81) gelagert sind.

13. Tischanordnung nach einem der Ansprüche 9 bis 12,
**dadurch gekennzeichnet, dass**
die ebene Tischplatte (55) mittels eines Torque-Motors (56, 57) verdrehbar im Mittelsteg (52) der Brücke (51) gelagert ist.

14. Tischanordnung nach einem der Ansprüche 9 bis 13,
**dadurch gekennzeichnet, dass**
die Fahrantriebe der beiden Schlitten (80, 81) elektrische Linearmotoren sind, deren Primärteile (82, 83) mit den jeweiligen Schlitten fest verbunden und deren Sekundärteile (37, 38) an den Seitenwänden (2, 3) des Maschinenständers (1) befestigt sind.

15. Tischanordnung nach Anspruch 14,
**dadurch gekennzeichnet, dass**
die Linearmotoren der beiden Schlitten (80, 81) elektrisch synchronisiert und die Schlitten ggf. über eine Zugstange (88) miteinander gekoppelt sind.

16. Tischanordnung nach einem der Ansprüche 9 bis 15,
**dadurch gekennzeichnet, dass**
die Drehachse der Lageranordnungen der Brücke (51) in den Schlitten (80, 81) etwa im Niveau der Oberfläche der Tischplatte (55) verläuft.

17. Tischanordnung nach einem der Ansprüche 9 bis 16,
**dadurch gekennzeichnet, dass**
die Torque-Motoren in den Schlitten (80, 81) und im Mittelsteg (52) der Brücke (51) Innenläufermotoren mit gekühlten äußeren Statoren sind.

18. Tischanordnung nach einem der Ansprüche 9 bis 17,
**dadurch gekennzeichnet, dass**
der Mittelsteg (51) des Schwenktisches mit den beiden endseitigen Schenkelteile (53, 54) und den bogenförmigen Übergangsabschnitten zwischen dem Mittelsteg (52) und den Schenkelteile doppelwandig ausgebildet ist.

19. Tischanordnung nach einem der Ansprüche 9 bis 18,
**dadurch gekennzeichnet, dass**
an den Schlitten (80, 81) endseitige Verlängerungen ausgebildet sind, an deren vertikalen Außenseiten die Sekundärteile der jeweils zugehörigen elektrischen Linearmotoren befestigt sind.

## Claims

1. Milling and drilling machine having
- a dimensionally stable machine frame (1) which has two parallel side walls (2, 3) and an upper transverse support (5) which is attached to both the side walls (2, 3),
- a machining unit (23) which can be moved by motor on at least two coordinate axes and which contains a rotationally driven working mandrel (26) with exchangeable tools, and
- a front section (4) disposed in front of the machine frame (1), on the two transversely spaced-apart horizontal guide rails of which a workpiece table arrangement (50) with a table plate for clamping a workpiece is disposed so as to be moveable by motor on a horizontal Y-coordinate axis,
**characterised in that**
- next to the inner sides of the two side walls (2, 3) of the machine frame (1) stationary elongate supports (43, 44) are provided, to which guide rails (45, 46) for the workpiece table arrangement (50) are attached and
- the drive for the travel movement of the workpiece table arrangement (50) on the Y-coordinate axis has two electrically synchronised linear motors, the secondary parts (37, 38) of which are attached to the inner sides of the two side walls (2, 3) of the machine frame (1) and the primary parts (82, 83) of which are mounted vertically on carriages (80, 81) of the workpiece table arrangement (50).

2. Milling and drilling machine as claimed in claim 1, **characterised in that** a carriage (16) can be moved on the transverse support (5) in horizontal guides and, on front-side vertical rails (21, 22), supports the machining unit (23) formed as a milling head.

3. Milling and drilling machine as claimed in claim 1 or 2, **characterised in that** the drive assemblies for the horizontal carriage (16) and the machining unit (23) are electric linear motors, the secondary part of which is in each case disposed between the guide rails which are provided in pairs.

4. Milling and drilling machine as claimed in any one of the preceding claims, **characterised in that** the workpiece table (55) can be moved on two horizontal guide rails (45, 46) which are provided on the front section (8) and on a pedestal-like base internally on the side walls (2, 3) of the machine stand (1).

5. Milling and drilling machine as claimed in claim 4, **characterised in that** the drive for the workpiece table (55) has two electrically synchronised linear motors, the secondary parts (37, 38) of which are mounted on the inner sides of the two stand side walls (2, 3) and the primary parts of which are mounted vertically on structural bodies of the table construction.

6. Milling and drilling machine as claimed in claim 5, **characterised in that** the two side walls (2, 3) of the machine stand (1) each have a front-side step (35, 36).

7. Milling and drilling machine as claimed in any one of the preceding claims, **characterised in that** a chip collector is disposed in the free space (42) defined by the front section (8) and the side walls (2, 3).

8. Milling and drilling machine as claimed in any one of the preceding claims,
**characterised in that** the front section (4) has a front transverse wall (8) which is rigidly connected to the two side walls (2, 3) of the machine stand (1) and is the same height as the front end parts of the two side walls (2, 3).

9. Workpiece table arrangement for a milling and drilling machine having a table plate for clamping a workpiece on a horizontal Y-coordinate axis, which is disposed so as to be moveable by motor, having
- a bridge (51) which can be moved by motor about a horizontal axis of rotation, on the middle web (52) of which bridge, which is stable and transversely offset with respect to the axis of rotation, a planar table plate (55) with clamping means for workpiece attachment is disposed,
**characterised in that**
- the limb parts (53, 54) of the bridge (51), which adjoin the middle web (52) at both ends, are mounted in a respective carriage (80, 81) so as to be synchronously rotatable by motor and
- the two carnages (80, 81) each have a primary part (82, 83) of an electric linear motor and guide shoes (84, 85).

10. Table arrangement as claimed in claim 9, **characterised in that** electrically synchronised torque motors are disposed in the carriages (80, 81) as pivot drives for the bridge (51).

11. Table arrangement as claimed in claim 9 or 10, **characterised in that** fixing devices for fixing the bridge (51) in selected positions are disposed in the carriages (80, 81).

12. Table arrangement as claimed in any one of claims 9 to 11, **characterised in that** the limb parts (53, 54) of the bridge (51) are mounted via axial/radial bearings in the carnages (80, 81).

13. Table arrangement as claimed in any one of claims 9 to 12, **characterised in that** the planar table plate (55) is mounted by means of a torque motor (56, 57) so as to be rotatable in the middle web (52) of the bridge (51).

14. Table arrangement as claimed in any one of claims 9 to 13, **characterised in that** the travel drives of the two carriages (80, 81) are electric linear motors, the primary parts (82, 83) of which are fixedly connected to the respective carriages and the secondary parts (37, 38) of which are attached to the side walls (2, 3) of the machine stand (1).

15. Table arrangement as claimed in claim 14, **characterised in that** the linear motors of the two carriages (80, 81) are electrically synchronised and the carriages are optionally coupled to each other via a tension rod (88).

16. Table arrangement as claimed in any one of claims 9 to 15, **characterised in that** the axis of rotation of the bearing arrangements of the bridge (51) extends in the carriages (80, 81) approximately at the level of the surface of the table plate (55).

17. Table arrangement as claimed in any one of claims 9 to 16, **characterised in that** the torque motors in the carriages (80, 81) and in the middle web (52) of the bridge (51) are inner rotor motors with cooled outer stators.

18. Table arrangement as claimed in any one of claims 9 to 17, **characterised in that** the middle web (51) of the pivot table with the two end-side limb parts (53, 54) and the arcuate transition portions between the middle web (52) and the limb parts are formed with double walls.

19. Table arrangement as claimed in any one of claims 9 to 18, **characterised in that** end-side extensions are formed on the carriages (80, 81), on the vertical outer sides of which extensions are attached the secondary parts of the respectively associated electric linear motors.

## Revendications

1. Perceuse fraiseuse avec
- un châssis de machine (1) rigide, qui présente deux parois latérales parallèles (2, 3) et un support transversal supérieur (5), qui est fixé sur les deux parois latérales (2, 3),
- une unité d'usinage (23) pouvant être déplacée grâce à un moteur sur au moins deux axes de coordonnées, qui contient un arbre moteur (26) entraîné par rotation avec des outils interchangeables, et
- une avancée (4) disposée à l'avant du châssis de machine (1), comprenant deux rails de guidage horizontaux disposés à une certaine distance transversalement sur lesquels est disposé, de manière à pouvoir être déplacé grâce à un moteur, un système de table porte-pièce (50) avec un dessus de table permettant de serrer une pièce à usiner selon un axe de coordonnées Y horizontal,
**caractérisée en ce que**
- à côté des flancs intérieurs des deux parois latérales (2, 3) du châssis de la machine (1), on a prévu des appuis allongés fixes (43, 44), sur lesquels sont fixés des rails de guidage (45, 46) pour le système de table porte-pièce (50) et
- l'entraînement pour le mouvement de déplacement du système de table porte-pièce (50) selon l'axe des coordonnés Y présente deux moteurs linéaires synchronisés électriquement, dont les parties secondaires (37, 38) sont fixées sur les flancs intérieurs des deux parois latérales (2, 3) du châssis de machine (1) et dont les parties primaires (82, 83) sont montées à la verticale sur des chariots (80, 81) du système de table porte-pièce (50).

2. Perceuse fraiseuse selon la revendication 1, **caractérisée en ce que** un chariot (16), qui porte sur des rails verticaux (21, 22) situés du côté avant de l'unité d'usinage (23) conçue sous la forme d'une tête de fraisage, peut être déplacé sur le support transversal (5) dans des guidages horizontaux.

3. Perceuse fraiseuse selon la revendication 1 ou 2, **caractérisée en ce que**
- les groupes d'entraînement pour les chariots horizontaux (16) et l'unité d'usinage (23) sont des moteurs linéaires électriques dont la partie secondaire est disposée respectivement entre les rails de guidage prévus par paire.

4. Perceuse fraiseuse selon une des revendications précédentes,
**caractérisée en ce que**
la table porte-pièce (55) peut se déplacer sur deux rails de guidage horizontaux (45, 46) qui sont prévus sur l'avancée (8) et sur une base de type socle à l'intérieur sur les parois latérales (2, 3) du châssis de la machine (1).

5. Perceuse fraiseuse selon la revendication 4, **caractérisée en ce que** l'entraînement pour la table porte-pièce (55) présente deux moteurs linéaires synchronisés électriquement, dont les parties secondaires (37, 38) sont montées sur les flancs intérieurs des deux parois latérales (2, 3) du châssis et dont les parties primaires sont montées à la verticale sur les corps de construction de la table.

6. Perceuse fraiseuse selon la revendication 5, **caractérisée en ce que** les deux parois latérales (2, 3) du châssis de la machine (1) présentent à chaque fois un gradin du côté avant (35, 36).

7. Perceuse fraiseuse selon une des revendications précédentes,
**caractérisée en ce que**
un collecteur de copeaux est disposé dans l'espace libre (42) délimité par l'avancée (8) et les parois latérales (2, 3).

8. Perceuse fraiseuse selon une des revendications précédentes,
**caractérisée en ce que**
l'avancée (4) présente une paroi transversale avant (8), qui est raccordée de manière inamovible aux deux parois latérales (2, 3) du châssis de la machine (1) et a la même hauteur que les parties finales avant des deux parois latérales (2, 3).

9. Système de table porte-pièce pour une perceuse fraiseuse avec un dessus de table destiné au serrage d'une pièce à usiner dans un axe de coordonnées Y horizontal, qui est disposée de manière à pouvoir être déplacée grâce à un moteur, avec
- un pont (51) pouvant être déplacé grâce à un moteur autour d'un axe de rotation horizontal, comprenant une âme médiane (52) stable et décalée transversalement par rapport à l'axe de rotation, sur laquelle est disposé un dessus de table (55) plan doté de moyens de serrage pour la fixation de la pièce à usiner,
**caractérisée en ce que**
- les parties épaulement (53, 54) du pont (51), adjacentes aux deux extrémités à l'âme médiane (52), sont disposées de façon à être rotatives de manière synchrone au moyen d'un moteur dans chaque chariot (80, 81) et
- les deux chariots (80, 81) présentent chacun une partie primaire (82, 83) d'un moteur linéaire électrique et des sabots de guidage (84, 85).

10. Système de table selon la revendication 9, **caractérisé en ce que** des moteurs à couple électriquement synchronisés sont disposés dans les chariots (80, 81) à titre d'entraînements oscillants pour le pont (51).

11. Système de table selon la revendication 9 ou 10, **caractérisé en ce que**
des dispositifs de fixation pour fixer le pont (51) dans des positions choisies sont disposés dans les chariots (80, 81).

12. Système de table selon une des revendications 9 à 11, **caractérisé en ce que**
les parties épaulement (53, 54) du pont (51) sont placées sur des paliers axiaux/ radiaux dans les chariots (80, 81).

13. Système de table selon une des revendications 9 à 12, **caractérisé en ce que**
le dessus de la table plane (55) est placé dans l'âme médiane (52) du pont (51) de manière à pouvoir être déplacé par le biais d'un moteur à couple (56, 57).

14. Système de table selon une des revendications 9 à 13, **caractérisé en ce que**
les entraînements de déplacement des deux chariots (80, 81) sont des moteurs linéaires électriques dont les parties primaires (82, 83) sont raccordées solidement avec les chariots respectifs et dont les parties secondaires (37, 38) sont fixées sur les parois latérales (2, 3) du châssis de la machine (1).

15. Système de table selon la revendication 14, **caractérisé en ce que**
les moteurs linéaires des deux chariots (80, 81) sont synchronisés électriquement et les chariots sont couplés les uns aux autres le cas échéant par le biais d'un tirant (88).

16. Système de table selon une des revendications 9 à 15, **caractérisé en ce que**
l'axe de rotation des systèmes de paliers du pont (51) dans les chariots (80, 81) se situe à peu près au niveau de la surface du dessus de table (55).

17. Système de table selon une des revendications 9 à 16, **caractérisé en ce que**
les moteurs à couple dans les chariots (80, 81) et dans l'âme médiane (52) du pont (51) sont des moteurs à rotors internes avec des stators externes refroidis.

18. Système de table selon une des revendications 9 à 17, **caractérisé en ce que**
l'âme médiane (51) de la table oscillante, avec les deux parties épaulement (53, 54) du côté de l'extrémité et les sections de transition en arc de cercle, a une double paroi entre l'âme médiane (52) et les parties épaulement.

19. Système de table selon une des revendications 9 à 18, **caractérisé en ce que**
des prolongements du côté extrémité, sur les faces externes verticales desquels sont fixées les parties secondaires des moteurs linéaires électriques respectivement associés, sont formés sur les chariots (80, 81).
